# EUROPÄISCHE PATENTANMELDUNG

(11) **EP 4 488 025 A1**
(43) Veröffentlichungstag der Anmeldung: **08.01.2025**
(21) Anmeldenummer: 24180393.1
(22) Anmeldetag: 06.06.2024
(51) Int. Cl.: B29C 43/28, B29C 43/52, B29C 43/48, B29C 70/50, B32B 37/08, B32B 37/10, B32B 37/16, B32B 37/06, B32B 37/15, B32B 37/20, E04C 2/22, E04F 15/10, B29K 101/12, B29K 105/08, B29K 105/04, B29K 105/26, B29K 309/08

(54) **VERFAHREN ZUM HERSTELLEN VON KUNSTSTOFF-VERBUNDPLATTEN**

(30) Priorität: 03.07.2023 DE 102023117445
(71) Anmelder: Siempelkamp Maschinen- und Anlagenbau GmbH, 47803 Krefeld (DE)
(72) Erfinder: Hüneke, Jörg Heinz, 47798 Krefeld (DE); Schöler, Michael, 47509 Rheurdt (DE)
(74) Vertreter: Andrejewski - Honke Patent- und Rechtsanwälte Partnerschaft mbB

(57) **Zusammenfassung**

Die Erfindung betrifft ein Verfahren zum Herstellen von Kunststoff-Verbundplatten in einer kontinuierlichen Presse (9),
wobei ein thermoplastischer Kunststoff in einer Extrusionsvorrichtung (1) erwärmt und zu einer Kunststoffbahn (2) geformt wird,
wobei die Kunststoffbahn (2) gemeinsam mit einer oberen Verstärkungsbahn (7b) und/oder einer unteren Verstärkungsbahn (7a) in eine kontinuierliche Presse (9) eingeführt und in der Presse (9) zu einer oberseitig und/oder unterseitig mit der Verstärkungsbahn (7a, 7b) versehenen Kunststoff-Verbundplatte verpresst wird,
wobei die obere Verstärkungsbahn (7b) und/oder die untere Verstärkungsbahn (7a) während des Pressens in eine oder beide Außenschichten der Kunststoffbahn (2) eingebettet wird/werden

Das Verfahren ist dadurch gekennzeichnet, dass lediglich eine oder beide Außenschichten der aus der Extrusionsvorrichtung (1) austretenden Kunststoffbahn (2) vor dem Einlauf in die Presse (9) und vor dem Zuführen der Verstärkungsbahnen (7a, 7b) mit einer Kühlvorrichtung (5) gekühlt und dadurch vorgehärtet wird/werden.

## Beschreibung

Die Erfindung betrifft ein Verfahren zum Herstellen von Kunststoff-Verbundplatten in einer kontinuierlichen Presse,
wobei ein thermoplastischer Kunststoff in einer Extrusionsvorrichtung erwärmt und zu einer Kunststoffbahn geformt wird,
wobei die Kunststoffbahn gemeinsam mit einer oberen Verstärkungsbahn und/oder einer unteren Verstärkungsbahn in eine kontinuierliche Presse eingeführt und in der Presse zu einer oberseitig und/oder unterseitig mit der Verstärkungsbahn versehenen Kunststoff-Verbundplatte verpresst wird,
wobei die obere Verstärkungsbahn und/oder die untere Verstärkungsbahn während des Pressens in eine oder beide Außenschichten der Kunststoffbahn eingebettet wird bzw. eingebettet werden.

Kontinuierliche Presse meint im Rahmen der Erfindung insbesondere eine Doppelbandpresse mit einem endlos umlaufenden, oberen Pressband und einem endlos umlaufenden, unteren Pressband, wobei die Pressbänder insbesondere als Stahlpressbänder ausgebildet sind und vorzugsweise unter Zwischenschaltung von Wälzkörperaggregaten, z.B. Rollstangen, gegen die obere Pressenplatte und die untere Pressenplatte abgestützt sind. Bei den Pressenplatten handelt es sich insbesondere um temperierbare Pressenplatten, z.B. heizbare oder kühlbare Pressenplatten.

Die Kunststoff-Verbundplatte wird aus einem thermoplastischen Kunststoff hergestellt, wobei in die Außenschichten (d.h. die oberflächennahen Schichten) der extrudierten Kunststoffbahn und folglich in die Oberflächen eine oder mehrere Verstärkungsbahnen integriert werden. Die Verstärkungsbahnen können als textile Bahnen, z.B. als Gewebebahnen oder auch als Vlies, ausgebildet sein. Bevorzugt handelt es sich um eine textile Bahn aus Glasfasern, z.B. eine Glasfasergewebe.

Ein Verfahren zur Herstellung einer solchen Kunststoff-Verbundplatte ist z.B. aus der DE 10 2008 021 796 B4 bekannt. Dabei wird die aus der Extrusionsvorrichtung austretende Kunststoffbahn vor dem Einlauf in die Presse und vor dem Zuführen der Gewebebahnen zunächst mit einer Kühlvorrichtung vorgehärtet. Im Zuge des Pressens werden die Gewebebahnen als obere bzw. untere Deckschicht bereichsweise oder vollständig in die Oberfläche der Kunststoff-Gewebe-Verbundplatte eingebettet. Das bekannte Verfahren hat sich bewährt. Es ist jedoch weiterentwicklungsfähig. - Hier setzt die Erfindung ein.

Der Erfindung liegt die Aufgabe zugrunde, ein Verfahren der eingangs beschriebenen Art zu schaffen, mit welchem sich stabile Kunststoffplatten auf kostengünstige und wirtschaftliche Weise herstellen lassen.

Zur Lösung dieser Aufgabe lehrt die Erfindung bei einem gattungsgemäßen Verfahren der eingangs beschriebenen Art, dass lediglich eine oder beide Außenschichten der aus der Extrusionsvorrichtung austretenden Kunststoffbahn vor dem Einlauf in die Presse und vor dem Zuführen der Verstärkungsbahnen mit einer Kühlvorrichtung gekühlt (bzw. angekühlt) und dadurch vorgehärtet wird bzw. vorgehärtet werden.

Dabei geht die Erfindung von der grundsätzlich bekannten Erkenntnis aus, dass sich besonders stabile und haltbare Kunststoffplatten als Verbundplatten herstellen lassen, indem in eine oder in beide Außenschichten und folglich Oberflächen der Platte eine oder mehrere Verstärkungsbahnen als Deckschichten integriert werden. Die mit der Kunststoffbahn in die Presse eingeführten Verstärkungsbahnen werden im Zuge des Pressens in die Außenschichten, d.h. in die oberflächennahen Schichten eingebettet. Dieser Prozess wird erfindungsgemäß dadurch optimiert, dass die aus der Extrusionsvorrichtung austretende Kunststoffbahn vor dem Einlauf in die Presse und vor dem Zuführen der Verstärkungsbahnen eine Kühlvorrichtung durchläuft. Erfindungsgemäß ist der Kühlprozess jedoch so ausgestaltet, dass lediglich die (beiden) Außenschichten oder auch nur lediglich eine der beiden Außenschichten der aus der Extrusionsvorrichtung austretenden Kunststoffbahn vor dem Einlauf in die Presse und vor dem Zuführen der Verstärkungsbahnen gekühlt und dadurch vorgehärtet wird bzw. vorgehärtet werden. Die Erfindung hat erkannt, dass für die Optimierung des Pressprozesses und eine optimale Einbettung der Verstärkungsbahnen in den Kunststoff eine Kühlung lediglich der Außenschichten und folglich eine oberflächennahe Kühlung ausreicht, um insbesondere zu verhindern, dass die Verstärkungsbahnen während des Verpressens zu stark in die Kunststoffbahn eingepresst werden. Das Ankühlen der Oberflächen erlaubt eine optimale Positionierung der Verstärkungsbahnen. Interessant ist in diesem Zusammenhang auch, dass der anschließende Pressprozess so geführt werden kann, dass optimale Platteneigenschaften gewährleistet werden, ohne dass die Gefahr des Einsinkens der Verstärkungsbahnen in den Kunststoff zu befürchten ist. Durch das Ankühlen der Oberflächen vor dem Einlauf in die Presse wird bereits das Eindringen in tiefere Schichten vermieden, so dass in dem sich anschließenden Pressprozess die Einstellungen zur Optimierung der Platteneigenschaften im Vordergrund stehen können. Darauf wird im Folgenden noch näher eingegangen.

Von besonderer Bedeutung ist im Rahmen der Erfindung das Ankühlen lediglich der Außenschichten der Kunststoffbahn, ohne dass eine vollständige Durchkühlung der Kunststoffbahn erfolgt. Denn für den erfindungsgemäßen Erfolg ist eine Kühlung der Oberflächen vollkommen ausreichend. Auf eine Durchkühlung und folglich eine Kühlung der inneren Schichten bzw. des Kerns der Kunststoffbahn wird explizit verzichtet. Denn die Kunststoffbahn tritt mit hohen Temperaturen aus der Extrusionsvorrichtung aus und wird anschließend auch in der kontinuierlichen Presse zumindest bereichsweise bei hohen Temperaturen bzw. mit hohen Temperaturen verpresst. Eine vollständige Abkühlung der Kunststoffbahn vor dem Einlauf in die Presse ist daher nicht erforderlich und aus energetischen Gründen und folglich Kostengründen auch nicht gewünscht.

Vorzugsweise werden eine oder beide Außenschichten um eine Temperaturdifferenz von zumindest 50 °C, z.B. 50 °C bis 80 °C abgekühlt. Die Temperatur des Kerns durch das Kühlen soll bevorzugt nicht abnehmen oder lediglich in geringem Maße abnehmen. So wird bevorzugt vorgeschlagen, dass sich im Zuge des Kühlens der Oberflächen bzw. Außenschichten der Kern der Kunststoffbahn lediglich um eine geringe Temperaturdifferenz von max. 50 °C, vorzugsweise max. 30 °C reduziert.

Die Kühlung kann so gesteuert werden, dass die für den jeweiligen Anwendungsfall gewünschte Eindringtiefe der Verstärkungsbahn in die Kunststoffbahn erzielt wird. Die obere Verstärkungsbahn und/oder die untere Verstärkungsbahn kann folglich vollständig über ihre Gesamtdicke oder auch lediglich teilweise über einen Teil ihrer Dicke in die Außenschicht bzw. in die Außenschichten der Kunststoffbahn eingebettet werden. Eine vollständige Einbettung über die Gesamtdicke führt bevorzugt zur Bildung einer glatten Oberfläche der Verbundplatte. Das Einbetten über lediglich einen Teil der Dicke kann zur Erzeugung einer rauen Oberfläche führen, indem Teile der Verstärkungsbahn, z.B. des Gewebes, über die Oberfläche des Kunststoffs hinausragen und folglich in der Oberfläche der Verbundplatte nicht nur sichtbar bleiben, sondern auch die Oberflächenstruktur beeinflussen.

Zur erfindungsgemäßen Kühlung einer oder beider Außenschichten der Kunststoffbahn vor dem Einlauf in die Presse und vor dem Zuführen der Verstärkungsbahn durchläuft die Kunststoffbahn eine Kühlvorrichtung, die vorzugsweise als Durchlaufkühlvorrichtung ausgebildet ist, z.B. für eine Luftkühlung. Die Kühlvorrichtung ist der Presse vorgeordnet, z.B. in einem vorgegebenen Abstand vor dem Presseneinlauf angeordnet.

Mit der Kühlvorrichtung wird die Außenschicht (bzw. werden die Außenschichten) vorzugsweise über die gesamte Breite der Kunststoffbahn gekühlt, und zwar vorzugsweise gleichmäßig bzw. homogen über die gesamte Breite. Über die Dicke der Kunststoffbahn stellt sich jedoch beim Durchlauf durch die Kühlvorrichtung in der beschriebenen Weise ein inhomogenes Temperaturprofil und folglich ein Temperaturgradient mit den gekühlten Außenschichten ein.

Als Ausgangsmaterial für die Fertigung der Kunststoffbahn wird ein thermoplastischer Kunststoff verwendet, wobei in den thermoplastischen Kunststoff optional Zusatzpartikel und/oder Additive eingemischt sein können, z.B. auch (lose) Verstärkungsfasern. Aufgrund der Verwendung der oberflächennahen Verstärkungsbahnen kann in der Regel jedoch auf den Zusatz von faserartigen Verstärkungsmitteln in die Kunststoffbahn selbst verzichtet werden.

Besonders bevorzugt wird als Kunststoff für die Herstellung der Kunststoffbahn ein thermoplastisches Kunststoff-Recyklat verwendet. Dabei kann es sich vor allem um ein Recyklat aus Mischfraktionen von Verpackungskunststoffen handeln. Dieses Material steht in der Regel kostengünstig zur Verfügung. Auch aus Gründen der Nachhaltigkeit ist die Verwendung von Altkunststoffen vorteilhaft. Verpackungskunststoffe eignen sich in besonderer Weise als Ausgangsmaterial für die Herstellung hochwertiger Kunststoff-Platten. Dabei kann es sich um Lebensmittelverpackungen handeln, die aus mehreren Schichten unterschiedlicher Kunststoffe bestehen. Das Recyklat kann in geringem Maße auch über einen Faseranteil verfügen, der bei solchen Fraktionen aus anhaftenden Etiketten der Verpackungen besteht, die hochwertig sein können, da sie überwiegend aus primärem Zellstoff bestehen.

Der Kunststoff für die Herstellung der Kunststoffbahn wird im Rahmen der Erfindung in der Extrusionsvorrichtung und/oder in der Presse (z.B. in der Heizzone der Presse) bevorzugt auf eine Temperatur von mehr als 180 °C erwärmt. Insbesondere bei der Verwendung von Recyklat aus Mischfraktionen von Verpackungskunststoffen wird auf diese Weise ein zuverlässiges Schmelzen sämtlicher Bestandteile gewährleistet.

Nach einem weiteren Gedanken der Erfindung mit besonderer Bedeutung wird der thermoplastische Kunststoff, insbesondere das beschriebene Kunststoff-Recyklat, in der Extrusionsvorrichtung unter Freisetzung von Gas (und gegebenenfalls Druckerhöhung) erwärmt. Im Zuge der Bildung der Kunststoffbahn beim Austreten aus der Extrusionsvorrichtung schäumt das Material unter Porenbildung auf. Interessant ist die Tatsache, dass insbesondere bei der Verwendung von Kunststoff-Recyklat selbstständig im Zuge des Schmelzens die Freisetzung von Gas und folglich die Porenbildung auftritt, sodass bevorzugt auf die Zugabe von Schaumbildner oder dergleichen verzichtet werden kann. Die Erfindung umfasst aber grundsätzlich auch Ausführungsformen, bei denen (z.B. in der Extrusionsvorrichtung) Zusätze für die Erzeugung oder Verstärkung der Porenbildung zugegeben werden, z. B. Schaumbildner. Jedenfalls entsteht bevorzugt eine aufgeschäumte Kunststoffbahn mit Poren, und zwar in der Regel mit Poren über die Gesamtdicke der Kunststoffbahn. Die aufgeschäumte Kunststoffbahn wird in der kontinuierlichen Presse verpresst. Besonders bevorzugt erfolgt die Verpressung derart, dass eine Mehrschichtplatte mit aufgeporter Mittelschicht und verdichteten Deckschichten erzeugt wird, wobei die Verstärkungsbahnen in die verdichteten Deckschichten eingebettet sind. Die in der Presse erzeugte Kunststoffbahn zeichnet sich folglich durch ein über die Dicke inhomogenes Dichteprofil aus. Die Außenschichten werden stärker verdichtet als die Mittelschicht, so dass der beschriebene Mehrschichtaufbau entsteht, wobei sich der Begriff der mehreren Schichten grundsätzlich auf das gleiche Material, jedoch unterschiedliche Dichtebereiche beziehen kann. Das Herstellen solcher Mehrschichtplatten mit inhomogener Dichteverteilung in kontinuierlichen Pressen ist aus dem Stand der Technik grundsätzlich bekannt. Das Pressprogramm über die gesamte Länge der Presse lässt sich so einstellen, dass die gewünschte Dichteverteilung entsteht, und zwar vorzugsweise in einer Heiz-Kühl-Presse, auf die noch näher eingegangen wird. Ein solcher Pressvorgang zur Erzeugung von Platten mit inhomogener Dichteverteilung ist insbesondere im Zusammenhang mit der Verwendung des genannten Recyclingmaterials interessant. Denn es lassen sich Platten erzeugen, die ganz gezielt eine Mittelschicht mit geringer Dichte aufgrund der Porenstruktur aufweisen aber dennoch hochstabil sind, da die Deckschichten stärker verdichtet und die Poren gleichsam herausgedrückt werden. Die Stabilität wird weiter durch die erfindungsgemäß vorgesehenen Verstärkungsbahnen erhöht, so dass dem erfindungsgemäßen Verfahren insbesondere bei der Herstellung von Platten mit Mehrschichtstruktur besondere Bedeutung zukommt.

Bevorzugt erfolgt die Herstellung der Verbundplatte in einer Heiz-Kühl-Presse.

Die Kunststoffbahn wird folglich mit der oder mit den Verstärkungsbahnen in einer Heiz-Kühl-Presse verpresst, die zumindest im Einlaufbereich und/oder nach dem Einlaufbereich eine Heizzone und zumindest eine der Heizzone nachgeordnete Kühlzone aufweist. Die Kunststoffbahn kann mit den Verstärkungsbahnen ohne Verdichtung durch die Heizzone geführt werden. Anschließend erfolgt die Verdichtung auf die Enddichte in der Kühlzone. Heiz-Kühl-Pressen sind aus dem Stand der Technik bekannt, so dass auf herkömmliche Pressen zurückgegriffen werden kann. Interessant ist, dass in solchen Heiz-Kühl-Pressen sehr variable Pressprogramme gefahren werden können, die insbesondere in Kombination mit der vorangeschalteten Oberflächenkühlung der Bahn zu hervorragenden Ergebnissen führen. Das Verfahren lässt sich besonders wirtschaftlich durchführen, da die Kunststoffbahn grundsätzlich in heißem Zustand aus dem Extruder austritt. Durch das erfindungswesentliche Ankühlen der Oberflächen wird die Temperatur im Innern der Kunststoffbahn nicht oder jedenfalls nur geringfügig reduziert, so dass die Matte im grundsätzlich heißen Zustand mit lediglich angekühlten Oberflächen in die Heizzone der Presse einläuft. In der Heizzone erfolgt vor allem eine Formgebung der Bahn. Dazu können optional Randstreifen oder ähnliche Elemente als Führungselemente durch die Presse hindurchgeführt werden. Die Kunstoffbahn kann zwar mit einer Breitschlitzdüse in dem Extruder hergestellt und folglich bereits mit guter Form aus dem Extruder austreten. Dennoch ist es vorteilhaft, wenn eine weitere Formgebung in der Heizzone erfolgt, bevor die Matte in der Kühlzone konsolidiert und auf die Enddicke verdichtet wird. Da in der Presse und insbesondere in der Heizzone eine geeignete Kalibrierung der Matte erfolgt, müssen an die Formgebung beim Extrudieren keine besonders hohen Anforderungen gestellt werden, so dass auch an das Extrusionswerkzeug, z.B. eine Breitschlitzdüse, keine besonders hohen Anforderungen gestellt werden müssen.

In der Heizzone der kontinuierlichen Presse kann die Temperatur der Heizplatten in etwa 150 °C bis 250 °C, z.B. 160 °C bis 220 °C, vorzugsweise 170 °C bis 210 °C betragen. Alternativ oder ergänzend kann die Kunststoffbahn in der Heizzone auf diese Temperatur erwärmt werden, d.h. diese Temperaturen können sich nicht nur auf die Heizplattentemperatur, sondern alternativ auch auf die Temperatur der Bahn in der Presse beziehen.

In der Kühlzone beträgt die Plattentemperatur vorzugsweise 10 °C bis 80 °C, z. B. 20 °C bis 60 °C.

Grundsätzlich liegt es im Rahmen der Erfindung, lediglich auf einer Seite der Platte eine Verstärkungsbahn vorzusehen, so dass eine Verbundplatte zur Verfügung gestellt wird, die lediglich oberseitig oder unterseitig mit einer Verstärkungsbahn versehen ist. Bevorzugt wird jedoch eine beidseitig beschichtete Verbundplatte erzeugt, d.h. die Kunststoffplatte ist sowohl auf der Oberseite als auch auf der Unterseite mit einer Verstärkungsbahn versehen, die in die jeweilige Oberfläche eingebettet ist.

Gegenstand der Erfindung ist auch eine Kunststoff-Verbundplatte, die in der erfindungsgemäßen Weise hergestellt ist. Eine solche Platte kann insbesondere als Bodenplatte oder Bauplatte verwendet werden. Von besonderer Bedeutung ist die Verwendung einer Bodenplatte als Containerbodenplatte, d.h. als Bodenplatte, die in Frachtcontainern eingesetzt wird.

Die Dicke der erfindungsgemäßen Platte beträgt (einschließlich der eingebetteten Verstärkungsbahnen) insbesondere 5 mm bis 50 mm, z.B. 10 mm bis 40 mm oder 20 mm bis 40 mm, vorzugsweise 20 mm bis 30 mm oder 25 mm bis 30 mm.

Die Verstärkungsbahnen können als textile Bahnen, z.B. als Gewebebahnen oder auch als Gelege, ausgebildet sein. Alternativ kann auch ein Vlies verwendet werden. Bevorzugt handelt es sich um eine textile Bahn aus Fasern, z.B. Glasfasern, z. B. ein Glasfasergewebe. Alternativ kommen textile Bahnen (z.B. Gewebe oder Gelege) aus Fasern anderer Art in Frage, z. B. Mineralfasern, Metallfasern, Naturfasern (z. B. Jute oder Bambus) und/oder Polymerfasern (z. B. aus Aramid).

Die Dicke der Verstärkungsbahn kann bis zu 3 mm, z.B. bis zu 2 mm, vorzugsweise bis zu 1,5 mm betragen. Sie kann z. B. 0,3 mm bis 3 mm z. B. 0,5 bis 2 mm betragen.

Optional kann die Verstärkungsbahn bzw. die Fasern der Bahn mit einem Haftvermittler versehen sein, um den Verbund mit dem Kunststoff der Bahn zu optimieren.

Im Folgenden wird die Erfindung anhand einer Zeichnung näher erläutert, die lediglich ein Ausführungsbeispiel darstellt.

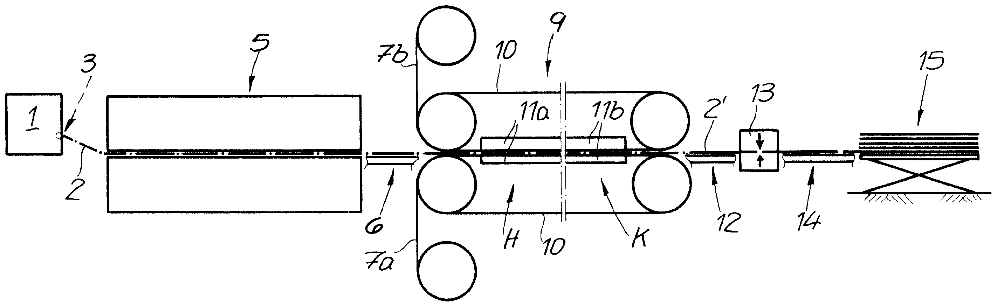

Die einzige Figur zeigt schematisch und stark vereinfacht eine Anlage zum Herstellen von Verbundplatten mit dem erfindungsgemäßen Verfahren.

Die Anlage zur Durchführung des Verfahrens weist eine Vorrichtung zum Erwärmen eines thermoplastischen Kunststoffs und zum Formen einer Kunststoffbahn auf. Dabei handelt es sich um eine Extrusionsvorrichtung 1, so dass ein thermoplastischer Kunststoff als Ausgangsmaterial in der Extrusionsvorrichtung 1 erwärmt und zu einer Kunststoffbahn 2 geformt wird. Die Extrusionsvorrichtung weist ausgangsseitig ein Extrusionswerkzeug 3 in Form einer Düse auf, die bevorzugt als Breitschlitzdüse 3 ausgebildet ist.

Die auf diese Weise erzeugte Kunststoffbahn 2 tritt in eine Kühlvorrichtung 5 ein. Im Ausführungsbeispiel handelt es sich um eine Durchlaufkühlvorrichtung, die z.B. für eine Luftkühlung ausgestaltet sein kann. An die Kühlvorrichtung 5 kann sich optional eine Förderstrecke 6 anschließen.

Anschließend läuft die Kunststoffbahn 2 in eine kontinuierlich arbeitende Presse 9 ein, die als Doppelbandpresse ausgebildet sein kann und in der die Kunststoffbahn 2 zu einem (Verbund-)Plattenstrang 2' verpresst wird. Die Presse 9 ist im Ausführungsbeispiel als Heiz-Kühl-Presse ausgebildet, die einlaufseitig eine Heizzone H und sich daran anschließend eine Kühlzone K aufweist. Dazu sind Heizplatten11a und Kühlplatten 11b als Pressenplatten vorgesehen. Die Presse ist als Doppelbandpresse mit endlos umlaufenden Pressbändern 10 ausgebildet.

Außerdem ist in der Figur erkennbar, dass nicht nur die Kunststoffbahn 2 in die Presse 9 einläuft, sondern dass die Kunststoffbahn 2 gemeinsam mit einer oberen Verstärkungsbahn 7b und einer unteren Verstärkungsbahn 7a in die Presse 9 eingeführt und in der Presse 9 zu einer Kunststoff-Verbundplatte bzw. einem Plattenstrang 2' verpresst wird, die bzw. der oberseitig mit der oberen Verstärkungsbahn und unterseitig mit der unteren Verstärkungsbahn versehen ist. Im Zuge des Pressens werden folglich die obere Verstärkungsbahn und die untere Verstärkungsbahn in die (oberflächennahen) Außenschichten der Kunststoffbahn 2 eingebettet. Diese Verstärkungsbahnen 7a, b können z.B. als Gewebebahnen, z.B. als Glasfasergewebe ausgebildet sein. Es können Gewebebahnen verwendet werden, die sich über die gesamte Plattenbreite erstrecken. Alternativ können aber auch Gewebebahnen mit einer geringeren Breite verwendet werden, so dass dann z.B. mehrere Gewebebahnen nebeneinander in die Presse eingeführt werden. Alternativ können auch Gelege verwendet werden.

Von besonderer Bedeutung ist erfindungsgemäß die Kühlung der Kunststoffbahn in der Kühlvorrichtung 5. Diese ist erfindungsgemäß so ausgestaltet, dass lediglich die beiden Außenschichten der aus dem Extruder 1 austretenden Kunststoffbahn 2 angekühlt und damit vorgehärtet werden. Die inneren Schichten bzw. der Kern der Kunststoffbahn 2 wird in der Kühlvorrichtung 5 nicht oder lediglich geringfügig gekühlt. Durch das Ankühlen der Oberflächen wird einfach und energetisch günstig gewährleistet, dass die Verstärkungsbahnen 7a,b im anschließenden Pressprozess nicht zu tief in das Innere der Matte gedrückt werden. Durch den Kühlprozess wird die Viskosität der oberflächennahen Schichten erhöht und damit ein zu tiefes Eindringen der Verstärkungsbahnen verhindert.

Auslaufseitig schließt sich an die Presse 9 optional eine weitere Förderstrecke 12 an. Der Verbundplattenstrang bzw. die Verbundplatte wird zu einer Schneidvorrichtung 13, z.B. einem Querschneider transportiert, der den Strang 2'in einzelne Platten aufteilt. Daran kann sich eine weitere Förderstrecke 14 und schließlich optional eine Vorrichtung 15 zur Endbearbeitung anschließen.

Besonders bevorzugt wird als Ausgangsmaterial für die Bahn 2 ein thermoplastisches Kunststoff-Recyclat aus Mischfraktionen von Verpackungskunststoffen verwendet. Der Kunststoff wird in der Extrusionsvorrichtung 1 unter Freisetzung von Gas erwärmt, so dass der Kunststoff bei der Bildung der Kunststoffbahn 2 beim Austreten aus der Extrusionsvorrichtung 1 aufschäumt und sich folglich Poren in dem Material ergeben. Diese aufgeschäumte Kunststoffbahn 2 wird in der Presse 9 derart verpresst, dass eine Mehrschichtplatte mit aufgeporter Mittelschicht und verdichteten Deckschichten erzeugt wird, wobei die Verstärkungsbahnen in die verdichteten Deckschichten eingebettet werden. Einzelheiten zu diesem Mehrschichtaufbau der Platten sind in den Figuren nicht dargestellt.

## Patentansprüche

1. Verfahren zum Herstellen von Kunststoff-Verbundplatten in einer kontinuierlichen Presse (9),
wobei ein thermoplastischer Kunststoff in einer Extrusionsvorrichtung (1) erwärmt und zu einer Kunststoffbahn (2) geformt wird,
wobei die Kunststoffbahn (2) gemeinsam mit einer oberen Verstärkungsbahn (7b) und/oder einer unteren Verstärkungsbahn (7a) in eine kontinuierliche Presse (9) eingeführt und in der Presse (9) zu einer oberseitig und/oder unterseitig mit der Verstärkungsbahn (7a, 7b) versehenen Kunststoff-Verbundplatte verpresst wird,
wobei die obere Verstärkungsbahn (7b) und/oder die untere Verstärkungsbahn (7a) während des Pressens in eine oder beide Außenschichten der Kunststoffbahn (2) eingebettet wird/werden,
**dadurch gekennzeichnet,**
**dass** lediglich eine oder beide Außenschichten der aus der Extrusionsvorrichtung (1) austretenden Kunststoffbahn (2) vor dem Einlauf in die Presse (9) und vor dem Zuführen der Verstärkungsbahnen (7a, 7b) mit einer Kühlvorrichtung (5) gekühlt und dadurch vorgehärtet wird/werden.

2. Verfahren nach Anspruch 1, **dadurch gekennzeichnet, dass** eine oder beide Außenschichten um eine Temperaturdifferenz von zumindest 50 °C, z.B. 50 °C bis 80 °C abgekühlt wird/werden.

3. Verfahren nach Anspruch 1 oder 2, **dadurch gekennzeichnet, dass** die Temperatur des Kerns durch das Kühlen der Außenschichten nicht oder lediglich um eine Temperaturdifferenz von maximal 50°, vorzugsweise maximal 30° reduziert wird.

4. Verfahren nach einem der Ansprüche 1 bis 3, **dadurch gekennzeichnet, dass** die obere Verstärkungsbahn (7b) und/oder die untere Verstärkungsbahn (7a) vollständig über ihre gesamte Dicke oder lediglich teilweise über einen Teil ihrer Dicke in die Außenschicht bzw. Außenschichten der Kunststoffbahn (2) eingebettet wird.

5. Verfahren nach einem der Ansprüche 1 bis 4, **dadurch gekennzeichnet, dass** als Kunststoff für die Herstellung der Kunststoffbahn (2) ein thermoplastisches Kunststoff-Recyklat, vorzugsweise aus Mischfraktionen von Verpackungskunststoffen, in der Extrusionsvorrichtung erwärmt wird.

6. Verfahren nach einem der Ansprüche 1 bis 5, **dadurch gekennzeichnet, dass** der thermoplastische Kunststoff in der Extrusionsvorrichtung (1) unter Freisetzung von Gas erwärmt wird und im Zuge der Bildung der Kunststoffbahn (2) beim Austreten aus der Extrusionsvorrichtung unter Porenbildung aufschäumt und dass diese aufgeschäumte Kunststoffbahn (2) in der Presse (9) derart verpresst wird, dass eine Mehrschichtplatte mit aufgeporter Mittelschicht und verdichteten Deckschichten erzeugt wird, wobei die Verstärkungsbahnen (7a, 7b) in die verdichteteten Deckschichten eingebettet sind.

7. Verfahren nach einem der Ansprüche 1 bis 6, **dadurch gekennzeichnet dass** die Kunststoffbahn (2) mit einer Breitschlitzdüse (3a) geformt wird.

8. Verfahren nach einem der Ansprüche 1 bis 7, **dadurch gekennzeichnet, dass** die Kunststoffbahn (2) mit der oder den Verstärkungsbahnen (7a, 7b) in einer Heiz-Kühl-Presse (9) verpresst wird, welche zumindest im Einlaufbereich und/oder nach dem Einlaufbereich (E) eine Heizzone (H) und zumindest eine der Heizzone nachgeordnete Kühlzone (K) aufweist.

9. Verfahren nach Anspruch 8, **dadurch gekennzeichnet, dass** die Kunststoffbahn (2) mit der bzw. mit den Verstärkungsbahnen (7a, 7b) ohne Verdichtung durch die Heizzone (H) geführt wird/werden.

10. Verfahren nach Anspruch 8 oder 9, **dadurch gekennzeichnet dass** die Heizplattentemperatur der kontinuierlichen Presse in der Heizzone (H) in etwa 150 °C bis 250 °C, z.B. 160 °C bis 220 °C, vorzugsweise 170 °C bis 210 °C beträgt und/oder, dass die Kunststoffbahn in der Heizzone auf diese Temperatur erwärmt wird, und/oder dass die Plattentemperatur in der Kühlzone 10 °C bis 80 °C, z. B. 20 °C bis 60 °C beträgt.

11. Verfahren nach einem der Ansprüche 8 bis 10, **dadurch gekennzeichnet dass** die Kunststoffbahn (2) mit der bzw. mit den Verstärkungsbahnen (7a, 7b) in der Kühlzone (K) auf die Enddichte der Kunststoffplatte bzw. Verbundplatte verdichtet wird.

12. Verfahren nach einem der Ansprüche 1 bis 11, dass als Verstärkungsbahn (7a, 7b) eine textile Bahn verwendet wird, z.B. eine Gewebebahn oder ein Gelege, und/oder dass die Verstärkungsbahn aus Fasern hergestellt ist, z.B. aus Glasfasern, Mineralfasern, Polymerfasern, Naturfasern und/oder Metallfasern.

13. Verfahren nach einem der Ansprüche 1 bis 12, **dadurch gekennzeichnet, dass** die Kunststoffbahn (2) zwischen einer unteren Verstärkungsbahn (7a) und einer oberen Verstärkungsbahn (7b) in die Presse (9) eingeführt und in der Presse zu einer beidseitig, d.h., sowohl unterseitig als auch oberseitig beschichteten Verbundplatte verpresst wird.

14. Kunststoffplatte, insbesondere Bodenplatte oder Bauplatte, hergestellt nach einem Verfahren nach einem der Ansprüche 1 bis 13.

15. Verwendung einer Kunststoffplatte nach Anspruch 14 als Containerbodenplatte.

## Geänderte Patentansprüche

### Geänderte Patentansprüche gemäss Regel 137(2) EPÜ.

1. Verfahren zum Herstellen von Kunststoff-Verbundplatten in einer kontinuierlichen Presse (9),
wobei ein thermoplastischer Kunststoff in einer Extrusionsvorrichtung (1) erwärmt und zu einer Kunststoffbahn (2) geformt wird,
wobei die Kunststoffbahn (2) gemeinsam mit einer oberen Verstärkungsbahn (7b) und/oder einer unteren Verstärkungsbahn (7a) in eine kontinuierliche Presse (9) eingeführt und in der Presse (9) zu einer oberseitig und/oder unterseitig mit der Verstärkungsbahn (7a, 7b) versehenen Kunststoff-Verbundplatte verpresst wird,
wobei die obere Verstärkungsbahn (7b) und/oder die untere Verstärkungsbahn (7a) während des Pressens in eine oder beide Außenschichten der Kunststoffbahn (2) eingebettet wird/werden,
**dadurch gekennzeichnet,**
**dass** lediglich eine oder beide Außenschichten der aus der Extrusionsvorrichtung (1) austretenden Kunststoffbahn (2) vor dem Einlauf in die Presse (9) und vor dem Zuführen der Verstärkungsbahnen (7a, 7b) mit einer Kühlvorrichtung (5) gekühlt und dadurch vorgehärtet wird/werden,
wobei die Temperatur des Kerns durch das Kühlen der Außenschichten nicht oder lediglich um eine Temperaturdifferenz von max. 50 °C reduziert wird.

2. Verfahren nach Anspruch 1, **dadurch gekennzeichnet, dass** eine oder beide Außenschichten um eine Temperaturdifferenz von zumindest 50 °C, z.B. 50 °C bis 80 °C abgekühlt wird/werden.

3. Verfahren nach Anspruch 1 oder 2, **dadurch gekennzeichnet, dass** die Temperatur des Kerns durch das Kühlen der Außenschichten nicht oder lediglich um eine Temperaturdifferenz von maximal 30° reduziert wird.

4. Verfahren nach einem der Ansprüche 1 bis 3, **dadurch gekennzeichnet, dass** die obere Verstärkungsbahn (7b) und/oder die untere Verstärkungsbahn (7a) vollständig über ihre gesamte Dicke oder lediglich teilweise über einen Teil ihrer Dicke in die Außenschicht bzw. Außenschichten der Kunststoffbahn (2) eingebettet wird.

5. Verfahren nach einem der Ansprüche 1 bis 4, **dadurch gekennzeichnet, dass** als Kunststoff für die Herstellung der Kunststoffbahn (2) ein thermoplastisches Kunststoff-Recyklat, vorzugsweise aus Mischfraktionen von Verpackungskunststoffen, in der Extrusionsvorrichtung erwärmt wird.

6. Verfahren nach einem der Ansprüche 1 bis 5, **dadurch gekennzeichnet, dass** der thermoplastische Kunststoff in der Extrusionsvorrichtung (1) unter Freisetzung von Gas erwärmt wird und im Zuge der Bildung der Kunststoffbahn (2) beim Austreten aus der Extrusionsvorrichtung unter Porenbildung aufschäumt und dass diese aufgeschäumte Kunststoffbahn (2) in der Presse (9) derart verpresst wird, dass eine Mehrschichtplatte mit aufgeporter Mittelschicht und verdichteten Deckschichten erzeugt wird, wobei die Verstärkungsbahnen (7a, 7b) in die verdichteteten Deckschichten eingebettet sind.

7. Verfahren nach einem der Ansprüche 1 bis 6, **dadurch gekennzeichnet dass** die Kunststoffbahn (2) mit einer Breitschlitzdüse (3a) geformt wird.

8. Verfahren nach einem der Ansprüche 1 bis 7, **dadurch gekennzeichnet, dass** die Kunststoffbahn (2) mit der oder den Verstärkungsbahnen (7a, 7b) in einer Heiz-Kühl-Presse (9) verpresst wird, welche zumindest im Einlaufbereich und/oder nach dem Einlaufbereich (E) eine Heizzone (H) und zumindest eine der Heizzone nachgeordnete Kühlzone (K) aufweist.

9. Verfahren nach Anspruch 8, **dadurch gekennzeichnet, dass** die Kunststoffbahn (2) mit der bzw. mit den Verstärkungsbahnen (7a, 7b) ohne Verdichtung durch die Heizzone (H) geführt wird/werden.

10. Verfahren nach Anspruch 8 oder 9, **dadurch gekennzeichnet dass** die Heizplattentemperatur der kontinuierlichen Presse in der Heizzone (H) in etwa 150 °C bis 250 °C, z.B. 160 °C bis 220 °C, vorzugsweise 170 °C bis 210 °C beträgt und/oder, dass die Kunststoffbahn in der Heizzone auf diese Temperatur erwärmt wird, und/oder dass die Plattentemperatur in der Kühlzone 10 °C bis 80 °C, z. B. 20 °C bis 60 °C beträgt.

11. Verfahren nach einem der Ansprüche 8 bis 10, **dadurch gekennzeichnet dass** die Kunststoffbahn (2) mit der bzw. mit den Verstärkungsbahnen (7a, 7b) in der Kühlzone (K) auf die Enddichte der Kunststoffplatte bzw. Verbundplatte verdichtet wird.

12. Verfahren nach einem der Ansprüche 1 bis 11, dass als Verstärkungsbahn (7a, 7b) eine textile Bahn verwendet wird, z.B. eine Gewebebahn oder ein Gelege, und/oder dass die Verstärkungsbahn aus Fasern hergestellt ist, z.B. aus Glasfasern, Mineralfasern, Polymerfasern, Naturfasern und/oder Metallfasern.

13. Verfahren nach einem der Ansprüche 1 bis 12, **dadurch gekennzeichnet, dass** die Kunststoffbahn (2) zwischen einer unteren Verstärkungsbahn (7a) und einer oberen Verstärkungsbahn (7b) in die Presse (9) eingeführt und in der Presse zu einer beidseitig, d.h., sowohl unterseitig als auch oberseitig beschichteten Verbundplatte verpresst wird.
